# EUROPEAN PATENT SPECIFICATION

(11) **EP 3 601 186 B1**
(45) Date of publication and mention of the grant of the patent: **12.01.2022**
(21) Application number: 18711711.4
(22) Date of filing: 05.03.2018
(51) Int. Cl.: C03C 17/36, B32B 17/10

(54) **INFRARED RAYS (IR) REFLECTIVE LAMINATED GLASS FOR A WINDOW**
INFRAROTSTRAHLEN-REFLEKTIERENDES VERBUNDGLAS FÜR EIN FENSTER
VERRE FEUILLETÉ RÉFLÉCHISSANT LES RAYONS INFRAROUGES (IR) POUR UNE FENÊTRE

(30) Priority: 20.03.2017 US 201762473859 P
(43) Date of publication of application: 05.02.2020
(73) Proprietor: Central Glass Company, Limited, Yamaguchi 755-0001 (JP)
(72) Inventor: BARD, Michael, Nashville, TN 37209 (US); HIRANO, Toshihiro, Matsusaka-shi Mie 515-0001 (JP); INOUE, Masafumi, Matsusaka-shi Mie 515-0001 (JP)
(74) Representative: Mewburn Ellis LLP
(86) International application number: PCT/JP2018/008212
(87) International publication number: WO 2018/173710

(56) References cited:
- US-A- 4 820 902
- US-A- 5 239 406

## Description

### Technical Field

The present disclosure relates generally to infrared rays (IR) reflective laminated glass for a window, and more specifically, to a vehicular window.

### Background Art

In a laminated glass for a window, especially a vehicular window, IR-reflective function has drawn great interest. An IR-reflective coating comprising at least one silver layer has been proposed as a candidate one because of high IR reflection function by the silver layer. However, as the silver layer has low moisture resistance, the silver layer should not be exposed to atmospheric air in order to prevent from corrosion of silver.

WO2000/73062 discloses a laminated glass comprising an IR reflective coating layer such as silver coated on a main surface of a glass substrate, facing an intermediate polymer film layer. In the laminated glass, a peripheral portion of the main surface is not coated by the IR reflective coating layer and the intermediate polymer film layer is fused to the peripheral portion. Further, an edge portion of the laminated glass is sealed up with a sealant. US4820902 discloses a vehicle windscreen (laminated glass for a vehicle window) in which a plastic interlayer of e.g. PVB is sandwiched between outer and inner glass sheets. An electroconductive coating, consisting of a film of silver between films of zinc stannate, is positioned on the inboard side of the outboard glass sheet, lying against the interlayer. US-5239406 discloses a reflective layer, layer 26 in Fig. 1, which may contain silver.

### Summary of Invention

Since the silver layer has a high refractive index, a border between a glass sheet layer and an IR-reflective coating exists. Therefore, the laminated glass disclosed in WO2000/73062 blindfolds the border and the peripheral portion of the main surface with a ceramic band.

The ceramic band is preferably disposed at a room side or the intermediated polymer film side of the main surface of glass sheet layer to improve weather resistance or water resistance and the like. The laminated glass with such structure limits an arrangement of the IR-reflective coating to the main surface of the glass sheet layer to be disposed at the room side of a window. In order to eliminate such limitation, the IR-reflective coating should be coated on a whole area of a main surface of a glass sheet layer. The IR-reflective coating coated on a whole area of a main surface can enable an arrangement of the IR-reflective coating to a main surface of a glass sheet layer disposed at an outside of the window.

However, in a laminated glass with an IR-reflective coating comprising at least one silver layer coated on any whole main surface of glass sheet layers, the silver layer is easily attacked by moisture, water or the like from an edge portion of the laminated glass, resulting in corrosion of silver. The present disclosure provides, among other features, a new laminated glass for a window with an IR-reflective coating comprising at least one silver layer coated on any whole main surface of glass sheet layers in order to overcome the drawbacks mentioned above in the prior art.

According to one aspect of the present invention, a laminated glass for a window, comprising: a first glass sheet layer comprising a first main surface to face an outside of the glass window and a second main surface facing other layers; a second glass sheet layer comprising a third main surface facing other layers and a fourth main glass surface to face a room side; a first intermediate polymer film layer between the first and the second glass sheet layers; an IR-reflective coating layer, comprising at least one silver layer, on a whole area of at least one of the second and third main surfaces; a first intermediate polymer film layer between the first and the second glass sheet layers; and a sealant on all the way through an edge portion of the IR-reflective coating, wherein the second and the third main surfaces recess from the most outer point of the edge portions of the first and the second glass sheet layers so that space generated by recessing of the second and the third main surfaces becomes a receiving area of the sealant.

The present disclosure advantageously provides a laminated glass having the above-mentioned structure, such that a protection, from moisture and humidity, of the silver layer of the IR-reflective coating coated on a whole area of at least one of the second and third main surfaces is ensured.

### Brief Description of Drawings

For a more complete understanding of the example aspects, references are made to the following descriptions taken in connection with the accompanying drawings in which:
[fig.1] FIG. 1 illustrates a sectional view of a main part of a laminated glass for a window of the present invention; and
[fig.2]FIG. 2 illustrates a sectional view of another embodiment of the present invention.

The drawings referred to in this description are not to be understood as being drawn to scale except if specifically noted, and such drawings are only exemplary in nature.

### Description of Embodiments

In the following description, for purposes of explanation and not limitation, specific details are set forth in order to provide an understanding of certain embodiments of the present invention. However, it will be apparent to those skilled in the art that the present invention may be practiced in other embodiments that depart from these specific details. In other instances, detailed descriptions of well-known devices, processes, techniques, and methods are omitted so as to not obscure the description with unnecessary detail. We refer now more particularly to the accompanying drawings, in which like reference numerals indicate like parts/elements throughout the several views.

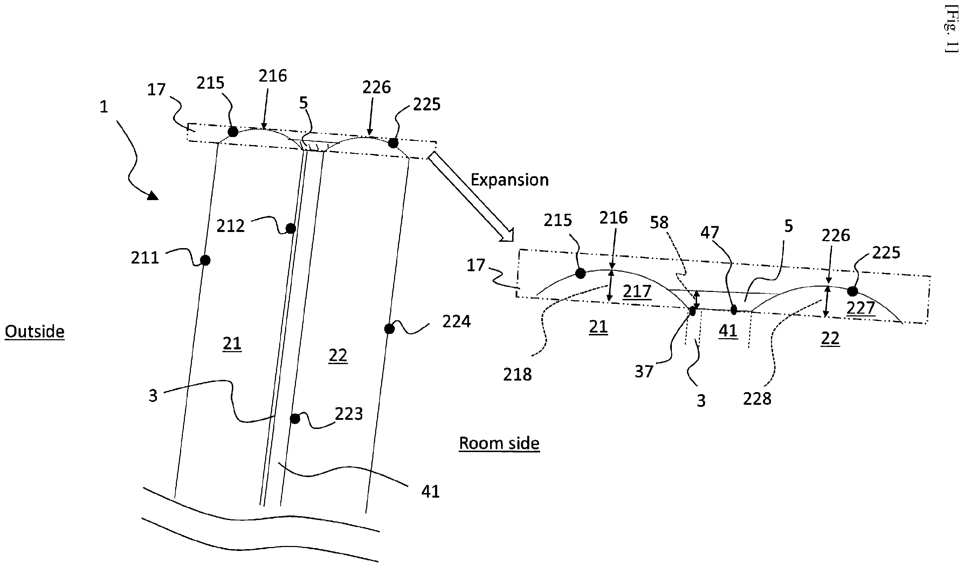

FIG. 1 shows a sectional view schematically presenting a main part of a laminated glass for a window of the present invention, including an expanded view of "edge portion" 17 of the laminated glass 1. In accordance with aspects of the present invention, the laminated glass (for a window) 1 comprises: a first glass sheet layer 21 comprising a first main surface 211 to face an outside of the window, a second main surface 212 facing other layers, and an edge surface 215 preferably including the most outer point 216 of the edge portion 217 of the first glass sheet layer 1; a second glass sheet layer comprising a third main surface 223 facing other layers and a fourth main glass surface 224 to face a room side, and an edge surface 225 preferably including the most outer point 226 of the edge portion 227 of the second glass sheet layer 1.

The laminated glass 1 also comprises an IR-reflective coating layer 3, comprising at least one silver layer, on a whole area of at least one of the second and third main surfaces (212, 223); a first intermediate polymer film layer 41 between the first and the second glass sheet layers (21, 22); and a sealant 5 on all the way through an edge portion 37 of the IR-reflective coating layer 3.

The thickness 58 of the sealant 5 is defined as the shortest distance from the edge portion 37 to the outermost of the sealant 5 as shown in FIG. 1. The thickness 58 may be between 30 µm to 1000 µm. In the case that the thickness 58 is less than 30 µm, it becomes difficult to seal up the edge portion 37 of the IR-reflective coating layer 3 without leakage over the way through the edge portion 37. On the other hand, in the case that the thickness 58 is more than 1000 µm, it can easily generate an insufficient curing of the sealant 5, resulting in defective appearance of the laminated glass 1. Considering these factors, the thickness 58 may be between 50 µm and 500 µm, preferably between 80 µm and 300 µm.

The sealant 5 may be made of at least one sealing agent selected from a group consisting of epoxy resin, silicone resin, urethane resin, acrylic resin, polyester resin and the like. These sealing agents are commercially available. An example sealing agent of the epoxy resin may include at least one of: Etone DX Clear 1003 modified (by Kawakami Paint MFG.), Epfine (by Fine Polymers Co., Ltd.), TEPIC series (by Nissan Chemical Co., Ltd.), and the like. An example sealing agent of the silicone resin may include at least one of: KR-220L, KR-220LP, KR-251, KR-255, KR-282 (by Shin-Etsu Silicone Chemical Co., Ltd) and the like. An example sealing agent of the urethane resin may include at least one of: Etone A-type Clear (by Kawakami Paint MFG.), DM-653, DM-675, DM-677, DM-678, DF-407 (by DIC Co., Ltd.) and the like. An example sealing agent of the acrylic resin may include at least one of: WSA-1070, WHW-822, WSA-950 (by DIC Co., Ltd.) and the like. An example sealing agent of the polyester resin may include at least one of: S-144, CD-520P, BCD-3090 (by DIC Co., Ltd.) and the like. Among the sealing agents, the sealing agent of the epoxy resin and or silicone resin is more preferable.

The glass substrate layers 21, 22 preferably have a curved shape through a bending process of a flat glass sheet. The glass substrate layers 21, 22 may be a thermally tempered glass, a chemically tempered glass, and a non-tempered glass. As a material of the glass substrate layers 21, 22, a soda-lime silicate glass defined by ISO16293-1 may be used. The soda-lime silicate glass may comprise a colorant such as iron oxide and cobalt oxide, whereby to present a color such as pale green, dark green, pale gray, dark gray, pale blue or dark blue. Further, a thickness of the glass substrate layers 21, 22 may be 0.4 mm to 5 mm, preferably 0.6 mm to 3 mm.

The glass substrate layers 21, 22 may also have edge surfaces 215, 225, respectively. The edge surfaces 215, 225 may have R-shaped surfaces as shown in FIG. 1. The edge surfaces 215, 225 comprising R-shaped surfaces also respectively have the most outer points 216, 226 of the edge portions 217, 227 of the first and the second glass sheet layers, resulting in that the second and the third main surfaces 212, 223 (also the first and fourth main surface 211, 224) recess from the most outer points 216, 226, such that space generated by recessing of the second and the third main surfaces becomes a receiving area of the sealant. The R-shaped surfaces may be processed through polishing grinding or polishing the edge portion of glass substrate layers 21, 22. Moreover, as another example, the edge surfaces 215, 225 of the glass substrate layers 21, 22 may have flat surfaces including the most outer point 216, 226, and corners of edge portion 17 are planed off.

A size of the receiving area may depend on distances 218, 228 from the most outer points 216, 226 to the most outer point of main surfaces 212, 223 (corresponding to the long dashed double-dotted line in FIG. 1). The distances 218, 228 may be between 0.01 mm and 3 mm. In the case that distances 218, 228 are less than 0.01 mm, an effect as the receiving area of the sealant becomes small. On the other hand, in the case that distances 218, 228 are more than 3 mm, an appearance of edge portion 17 is lowered. Considering these factors, the distance 218, 228 may be between 0.01 mm and 3 mm, preferably between 0.03 mm and 2 mm.

The IR-reflective coating layer 3 may comprise at least one silver layer, and may be coated on a whole area of at least one of the second and third main surfaces 212, 223. Preferably, the IR-reflective coating layer 3 is multi-layers coating comprising at least one silver layer and dielectric layers made of dielectric material such as tin oxide, zinc oxide, titanium oxide, silicon oxide, silicon oxynitride, silicon nitride. The IR-reflective coating layer 3 may be applied on the whole area of the second or third main surfaces 212, 223 by known methods such as magnetron sputtered vacuum deposition, metal-organic chemical vapor deposition or other comparable processes. A thickness of the IR-refractive coating layer 3 may be 20 nm to 500 nm, preferably 40 nm to 400 nm.

The IR-reflective coating layer 3 may be preferably coated on the second main surface 212 (preferably only the second main surfaces 212) from point of view of cutting IR ray from outside of the window. The main surface 212 has no border between the surface 212 and the IR-reflective coating 3. Thus, there can be no appearance problem resulting from the border for viewing of the laminated glass 1 from outside.

The first intermediate polymer film layer 41 is made of a thermoplastic resin, each layer is stacked, degassed between each layer and heated around softening temperature of the thermoplastic resin, to form laminated glass 1. An example thermoplastic resin may include at least one of: polyvinyl butyral resin (PVB), ethylene-vinyl acetate resin (EVA), polyurethane resin (PU) and the like. The first intermediate polymer film layer 41 may be covered over only main surfaces 212, 223. A thickness of the first intermediate polymer film layer 41 may be 0.2 mm to 0.9 mm, preferably 0.3 mm to 0.8 mm.

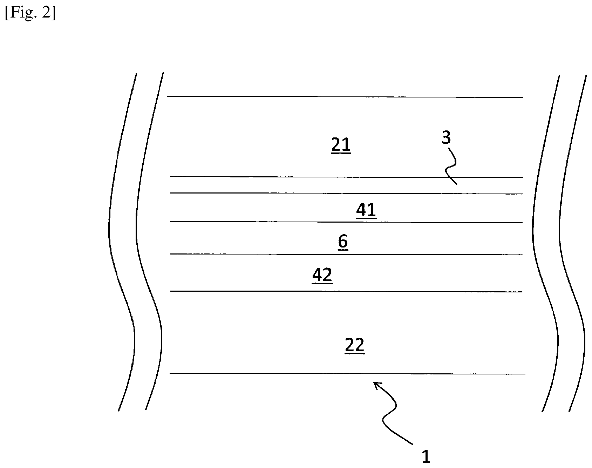

FIG. 2 shows a sectional view schematically presenting another embodiment of the present invention. The laminated glass 1 may further comprise a second intermediate polymer film layer 42 between the first intermediate polymer film layer 41 and the second glass sheet layer 22, and a polymer dispersed liquid crystal (PDLC) film layer 6 between the first and the second intermediate polymer film layers 41, 42.

The second intermediate polymer film layers 42 has same function and is made of the same material as that of the first intermediate polymer film layer 41. The second intermediate polymer film layer 42 is also used in the same manner as the first intermediate polymer film layer 41. A thickness of the first intermediate polymer film layer 42 may be 0.2 mm to 0.9 mm, preferably 0.3 mm to 0.8 mm.

PDLC film layer 6 may have a switching function by an electric field. Glass constructions comprising PDLC film layer 6 have been used as architectural or vehicle windows or sunroofs capable of selectively switching between an opaque (OFF) state for blocking, e.g., visible light, infrared and/or ultraviolet energy, and/or providing privacy, a transparent (ON) state for providing visibility and the transmission of visible light and/or energy, and a partially transparent (ON) state for allowing some light to pass without being fully transparent.

The switching function may be accomplished by applying an electric field to a PDLC material in PDLC film layer 6. When the PDLC material is subjected to an applied electric field, discrete formations, such as droplets of a liquid crystal(s) dispersed throughout a polymer matrix in the PDLC, assume a transparent state because the long molecular axes of the liquid crystals align in a nematic (parallel) orientation in the direction of the electric field. The parallel orientation provides a direction for light to pass. Under the presence of an electric field less than that required to produce a full nematic orientation, the liquid crystals allow some light to pass, creating a partially transparent appearance in the PDLC. When the electric field is removed, the liquid crystals return to a random orientation which scatters light and produces an opaque state.

The PDLC materials are typically formed by initiating polymerization of a monomer mixed with a liquid crystal(s) and then curing the polymer matrix, resulting in a phase separation of the liquid crystal into distinct domains throughout the rigid polymer backbone. The PDLC material is provided between two polymer films, such as polyethylene terephthalate (PET) films, which may be coated with a transparent conductive material, such as a transparent conductive oxide (TCO) between each polymer film and the PDLC material, to form the PDLC film layer 6.

At least one of glass substrate layers 21, 22, the first and second intermediate film layers 41, 42 and the PET films may be a darkened layer having a darkness for reducing the transmission of at least one of visible light and energy, such as a privacy glass and a privacy PVB.

The following examples are illustrative only and are not intended to be in any way limiting.

### Example 1

### <Preparation of a laminated glass 1>

Two square glass substrates (corresponding to glass substrate layers 21, 22) having R-shaped edge surfaces 215, 225 on all the way through an edge portion 17, and PVB film (corresponding to an intermediate polymer film layer 41) were prepared. In the substrates, both of the distance 218, 228 were 0.5 mm, thicknesses 2 mm, each length in the most outer point 216, 226 was 300 mm, and each main surface was of the same size. One of main surfaces (corresponding to main surface 212) was coated with a silver layer (corresponding to IR-reflective coating layer 3) by sputter coating. The PVB film had a thickness of 0.76 mm and the same size as that of the main surfaces.

The glass substrate and the PVB film were stacked so that the silver layer and the PVB film faced each other, and heated to 140°C through a deaeration process, resulting in a laminated glass. The laminated glass comprised a receiving area of a sealant on all the way through the edge portion 17 due to the R-shaped edge surfaces 215, 225 by which the second and the third main surfaces recessed from the most outer point 216, 226.

Subsequently, a sealant made of epoxy resin (DX1003, by Kawakami Paint MFG.) was on the receiving area and dried, resulting in a laminated glass 1 of the present invention. In the laminated glass 1, the thickness of the sealant was 100 µm.

For the laminated glass 1, a salt spray test was carried out. In the salt spray test, a water with 5 mass % of salt was sprayed over the laminated glass 1 with 1.5 ml/hour of spraying amount and under 35°C atmosphere.

No silver corrosion was observed after the test.

### Comparative example 1

The procedure of example 1 was repeated, with the exception that glass substrates not having R-shaped edge surfaces (that was the second and the third main surfaces did not recess from the most outer point 216, 226) were used.

Several sliver corrosions were observed at edge portion of the laminated glass 1 after the test.

## Claims

1. A laminated glass (1) for a window, comprising:
a first glass sheet layer (21) comprising a first main surface (211) to face outwardly of the window and a second main surface (212) facing other layers of the glass;
a second glass sheet layer (22) comprising a third main surface (223) facing other layers of the glass and a fourth main glass surface (224) to face inwardly of the window on a room side;
an IR-reflective coating layer (3), comprising at least one silver layer, over the whole area of at least one of the second and third main surfaces (212,223);
a first intermediate polymer film layer (41) between the first and the second glass sheet layers (21,22); and
a sealant (5) all the way along an edge portion of the IR-reflective coating layer (3),
wherein the edge portions (217,227) of the first and the second glass sheet layers have edge surfaces (215,225) shaped such that the outermost points of the second and third main surfaces (212,223) are recessed from the outermost points of the edge portions (217,227) of the first and the second glass sheet layers (21,22), and space generated by said recessing of the second and the third main surfaces (212,223) is a receiving area for the sealant (5).

2. Laminated glass of claim 1, wherein the thickness of the sealant (5) is between 30 µm and 1000 µm.

3. Laminated glass of claim 1 or 2 wherein the sealant (5) is made of at least one sealing agent selected from epoxy resin, silicone resin, urethane resin, acrylic resin and polyester resin.

4. Laminated glass of any one of the preceding claims wherein said edge surfaces (215,225) of the first and the second glass sheet layers are R-shaped surfaces including the outermost points of the edge portions (217,227) of the first and the second glass sheet layers (21,22).

5. Laminated glass of any one of the preceding claims wherein the recessing distances (218,228) from the outermost points (216,226) of the glass sheet layers to the outermost points of the main surfaces (212, 223) are between 0.01 mm and 3 mm.

6. Laminated glass of claim 5 wherein said recessing distances (218,228) from the outermost points (216,226) of the glass sheet layers to the outermost points of the main surfaces (212,223) are between 0.03 mm and 2 mm.

7. Laminated glass of any one of the preceding claims wherein the intermediate polymer film layer (41) is of thermoplastic resin including at least one of polyvinyl butyral resin (PVB), ethylene-vinyl acetate resin (EVA) and polyurethane resin (PU).

8. Laminated glass of any one of the preceding claims further comprising:
a second intermediate polymer film layer (42) between the first intermediate polymer film layer (41) and the second glass sheet layer (22); and
a polymer dispersed liquid crystal (PDLC) film layer (6) between the first and the second intermediate polymer film layers (41,42).

9. Laminated glass of any one of the preceding claims wherein the IR-reflective coating layer (3) is disposed on said second main surface (212) of the first glass sheet layer (21).

10. Laminated glass of any one of the preceding claims which is for a vehicle window.

11. Laminated glass of any one of the preceding claims wherein the glass sheet layers (21,22) have a curved shape, obtainable by bending a flat glass sheet.

12. Laminated glass of any one of the preceding claims wherein the thickness of the glass sheet layers (21,22) is 0.4 mm to 5 mm.

## Patentansprüche

1. Laminiertes Glas (1) für ein Fenster, Folgendes umfassend:
eine erste Glasscheibenschicht (21), die eine erste Hauptfläche (211), die vom Fenster aus nach außen gewandt ist, und eine zweite Hauptfläche (212), die weiteren Schichten des Glases zugewandt ist, umfasst;
eine zweite Glasscheibenschicht (22), die eine dritte Hauptfläche (223), die weiteren Schichten des Glases zugewandt ist, und eine vierte Hauptglasfläche (224), die auf einer Raumseite vom Fenster aus nach innen gewandt ist, umfasst;
eine IR-reflektierende Beschichtungsschicht (3), die zumindest eine Silberschicht umfasst, die sich über die gesamte Oberfläche von zumindest einer aus der zweiten und der dritten Hauptfläche (212, 223) erstreckt;
eine erste Polymerfilmzwischenschicht (41) zwischen der ersten und der zweiten Glasscheibenschicht (21, 22); und
ein Dichtungselement (5), das sich entlang eines gesamten Kantenabschnitts der IRreflektierenden Beschichtungsschicht (3) erstreckt, wobei
die Kantenabschnitte (217, 227) der ersten und der zweiten Glasscheibenschicht Kantenflächen (215, 225) aufweisen, die so geformt sind, dass die äußersten Punkte der zweiten und der dritten Hauptfläche (212, 223) von den äußersten Punkten der Kantenabschnitte (217, 227) der ersten und der zweiten Glasscheibenschicht (21, 22) zurückversetzt sind, wobei ein Zwischenraum, der durch die Zurückversetzung der zweiten und der dritten Hauptfläche (212, 223) gegeben ist, ein Aufnahmebereich für das Dichtungselement (5) ist.

2. Laminiertes Glas nach Anspruch 1, wobei die Dicke des Dichtungselements (5) zwischen 30 µm und 1000 µm beträgt.

3. Laminiertes Glas nach Anspruch 1 oder 2, wobei das Dichtungsmittel (5) aus zumindest einem Dichtungsmittel ausgewählt aus Epoxidharz, Silikonharz, Urethanharz, Acrylharz und Polyesterharz hergestellt ist.

4. Laminiertes Glas nach einem der vorhergehenden Ansprüche, wobei die Kantenflächen (215, 225) der ersten und der zweiten Glasscheibenschicht R-förmige Flächen sind, die die äußersten Punkte der Kantenabschnitte (217, 227) der ersten und der zweiten Glasscheibenschicht (21, 22) umfassen.

5. Laminiertes Glas nach einem der vorhergehenden Ansprüche, wobei die Zurückversetzungsabstände (218, 228) von den äußersten Punkten (216, 226) der Glasscheibenschichten zu den äußersten Punkten der Hauptflächen (212, 223) zwischen 0,01 mm und 3 mm betragen.

6. Laminiertes Glas nach Anspruch 5, wobei die Beabstandungsabstände (218, 228) von den äußersten Punkten (216, 226) der Glasscheibenschichten zu den äußersten Punkten der Hauptflächen (212, 223) zwischen 0,03 mm und 2 mm betragen.

7. Laminiertes Glas nach einem der vorhergehenden Ansprüche, wobei die Polymerfilmzwischenschicht (41) aus thermoplastischem Harz hergestellt ist, das zumindest eines aus Polyvinylbutyralharz (PVB), Ethylenvinylacetatharz (EVA) und Polyurethanharz (PU) umfasst.

8. Laminiertes Glas nach einem der vorhergehenden Ansprüche, ferner Folgendes umfassend:
eine zweite Polymerfilmzwischenschicht (42) zwischen der ersten Polymerfilmzwischenschicht (41) und der zweiten Glasscheibenschicht (22); und
eine polymerdispergierte Flüssigkristall-(PDLC-)Filmschicht (6) zwischen der ersten und der zweiten Polymerfilmzwischenschicht (41, 42).

9. Laminiertes Glas nach einem der vorhergehenden Ansprüche, wobei die IR-reflektierende Beschichtungsschicht (3) auf der zweiten Hauptfläche (212) der ersten Glasscheibenschicht (21) angeordnet ist.

10. Laminiertes Glas nach einem der vorhergehenden Ansprüche, das für ein Fahrzeugfenster vorgesehen ist.

11. Laminiertes Glas nach einem der vorhergehenden Ansprüche, wobei die Glasscheibenschichten (21, 22) eine gekrümmte Form aufweisen, die durch Biegen einer flachen Glasscheibe erhaltbar ist.

12. Laminiertes Glas nach einem der vorhergehenden Ansprüche, wobei die Dicke der Glasscheibenschichten (21, 22) 0,4 mm bis 5 mm beträgt.

## Revendications

1. Verre feuilleté (1) pour une fenêtre, comprenant :
une première couche de feuille de verre (21) comprenant une première surface principale (211) destinée à faire face à l'extérieur de la fenêtre et une deuxième surface principale (212) faisant face à d'autres couches du verre ;
une seconde couche de feuille de verre (22) comprenant une troisième surface principale (223) faisant face à d'autres couches du verre et une quatrième surface de verre principale (224) destinée à faire face à l'intérieur de la fenêtre sur un côté de pièce ;
une couche de revêtement réfléchissant les infrarouges (3), comprenant au moins une couche d'argent, sur toute l'aire d'au moins l'une des deuxième et troisième surfaces principales (212, 223) ;
une première couche de film polymère intermédiaire (41) entre les première et seconde couches de feuille de verre (21, 22) ; et
un matériau d'étanchéité (5) sur la totalité d'une partie de bord de la couche de revêtement réfléchissant les infrarouges (3),
dans lequel les parties de bord (217, 227) des première et seconde couches de feuille de verre ont des surfaces de bord (215, 225) formées de telle sorte que les points les plus extérieurs des deuxième et troisième surfaces principales (212, 223) sont en retrait par rapport aux points les plus extérieurs des parties de bord (217, 227) des première et seconde couches de feuille de verre (21, 22), et l'espace généré par ledit retrait des deuxième et troisième surfaces principales (212, 223) est une aire de réception pour le matériau d'étanchéité (5).

2. Verre feuilleté selon la revendication 1, dans lequel l'épaisseur du matériau d'étanchéité (5) est comprise entre 30 µm et 1 000 µm.

3. Verre feuilleté selon la revendication 1 ou 2, dans lequel le matériau d'étanchéité (5) est constitué d'au moins un agent d'étanchéité choisi parmi une résine époxy, une résine de silicone, une résine d'uréthane, une résine acrylique et une résine de polyester.

4. Verre feuilleté selon l'une quelconque des revendications précédentes, dans lequel lesdites surfaces de bord (215, 225) des première et seconde couches de feuille de verre sont des surfaces en forme de R comprenant les points les plus extérieurs des parties de bord (217, 227) des première et seconde couches de feuille de verre (21, 22).

5. Verre feuilleté selon l'une quelconque des revendications précédentes, dans lequel les distances de retrait (218, 228) depuis les points les plus extérieurs (216, 226) des couches de feuille de verre jusqu'aux points les plus extérieurs des surfaces principales (212, 223) sont comprises entre 0,01 mm et 3 mm.

6. Verre feuilleté selon la revendication 5, dans lequel lesdites distances de retrait (218, 228) depuis les points les plus extérieurs (216, 226) des couches de feuille de verre jusqu'aux points les plus extérieurs des surfaces principales (212, 223) sont comprises entre 0,03 mm et 2 mm.

7. Verre feuilleté selon l'une quelconque des revendications précédentes, dans lequel la couche de film polymère intermédiaire (41) est en résine thermoplastique comprenant au moins une résine parmi une résine de polyvinylbutyral (PVB), une résine d'éthylène-acétate de vinyle (Eva) et une résine de polyuréthane (PU).

8. Verre feuilleté selon l'une quelconque des revendications précédentes comprenant en outre :
une seconde couche de film polymère intermédiaire (42) entre la première couche de film polymère intermédiaire (41) et la seconde couche de feuille de verre (22) ; et
une couche de film de cristaux liquides dispersés dans un polymère (PDLC) (6) entre les première et seconde couche de film polymère intermédiaires (41, 42).

9. Verre feuilleté selon l'une quelconque des revendications précédentes, dans lequel la couche de revêtement réfléchissant les infrarouges (3) est disposée sur ladite deuxième surface principale (212) de la première couche de feuille de verre (21).

10. Verre feuilleté selon l'une quelconque des revendications précédentes, qui est destiné à une vitre de véhicule.

11. Verre feuilleté selon l'une quelconque des revendications précédentes, dans lequel les couches de feuille de verre (21, 22) ont une forme incurvée, pouvant être obtenue par cintrage d'une feuille de verre plate.

12. Verre feuilleté selon l'une quelconque des revendications précédentes, dans lequel l'épaisseur des couches de feuille de verre (21, 22) est de 0,4 mm à 5 mm.
